# EUROPÄISCHE PATENTSCHRIFT

(11) **EP 0 981 551 B1**
(45) Veröffentlichungstag und Bekanntmachung des Hinweises auf die Patenterteilung: **03.07.2002**
(21) Anmeldenummer: 98921488.7
(22) Anmeldetag: 24.04.1998
(51) Int. Cl.: C08F 4/629, C08F 10/00

(54) **KATALYSATORLÖSUNG ZUR POLYMERISATION VON ALPHA-OLEFINEN**
CATALYST SOLUTION FOR THE POLYMERIZATION OF ALPHA-OLEFINS
SOLUTION CATALYSANTE POUR LA POLYMERISATION D'ALPHA-OLEFINES

(30) Priorität: 09.05.1997 DE 19719517
(43) Veröffentlichungstag der Anmeldung: 01.03.2000
(73) Patentinhaber: Basell Polyolefine GmbH, 77694 Kehl (DE)
(72) Erfinder: GONIOUKH, Andrei, D-67373 Dudenhofen (DE); SCHAUSS, Eckard, D-67259 Heuchelheim (DE); KLIMESCH, Roger, D-64665 Alsbach-Hähnlein (DE); DECKERS, Andreas, D-55234 Flomborn (DE); WEBER, Wilhelm, D-67435 Neustadt (DE)
(86) Internationale Anmeldenummer: EP9802452
(87) Internationale Veröffentlichungsnummer: WO9851715

(56) Entgegenhaltungen:
- EP-A- 0 572 034
- EP-A- 0 612 769
- EP-A- 0 648 786

## Beschreibung

Gegenstand der vorliegenden Erfindung ist eine Katalysatorlösung zur Polymerisation von α-Olefinen, erhältlich durch
a) Umsetzung einer Metallocenverbindung der allgemeinen Formel I 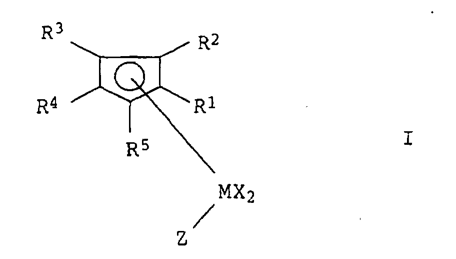 in der die Substituenten folgende Bedeutung haben:
   - M: Titan, Zirkonium, Hafnium, Vanadium, Niob oder Tantal
   - X: Wasserstoff, C₁- bis C₁₀-Alkyl, C₆- bis C₁₅-Aryl, Alkylaryl mit 1 bis 10 C-Atomen im Alkylrest und 6 bis 20 C-Atomen im Arylrest, -OR⁶ oder -NR⁶R⁷,
   wobei
   - R⁶ und R⁷: C₁- bis C₁₀-Alkyl, C₆- bis C₁₅-Aryl, Alkylaryl, Arylalkyl, Fluoralkyl oder Fluoraryl mit jeweils 1 bis 10 C-Atomen im Alkylrest und 6 bis 20 C-Atomen im Arylrest bedeuten,
   - R¹ bis R⁵: Wasserstoff, C₁- bis C₁₀-Alkyl, 5- bis 7-gliedriges Cycloalkyl, das seinerseits ein C₁- bis C₁₀-Alkyl als Substituent tragen kann, C₆- bis C₁₅-Aryl oder Arylalkyl, wobei gegebenenfalls auch zwei benachbarte Reste gemeinsam für 4 bis 15 C-Atome aufweisende gesättigte oder ungesättigte cyclische Gruppen stehen können, oder Si(R⁸)₃ mit
   - R⁸: C₁- bis C₁₀-Alkyl, C₃- bis C₁₀-Cycloalkyl oder C₆- bis C₁₅-Aryl,

   - Z: für X oder 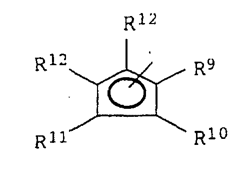 steht,
   wobei die Reste
   - R⁹ bis R¹³: Wasserstoff, C₁- bis C₁₀-Alkyl, 5- bis 7-gliedriges Cycloalkyl, das seinerseits ein C₁- bis C₁₀-Alkyl als Substituent tragen kann, C₆- bis C₁₅-Aryl oder Arylalkyl bedeuten und wobei gegebenenfalls auch zwei benachbarte Reste gemeinsam für 4 bis 15 C-Atome aufweisende gesättigte oder ungesättigte cyclische Gruppen stehen können, oder Si(R¹⁴)₃ mit
   - R¹⁴: C₁- bis C₁₀-Alkyl, C₆- bis C₁₅-Aryl oder C₃- bis C₁₀-Cycloalkyl,
   oder wobei die Reste R⁴ und Z gemeinsam eine Gruppierung R¹⁵-A- bilden, in der
   - R¹⁵: 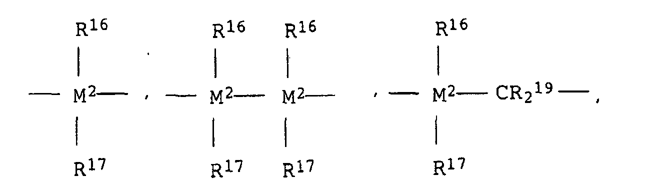 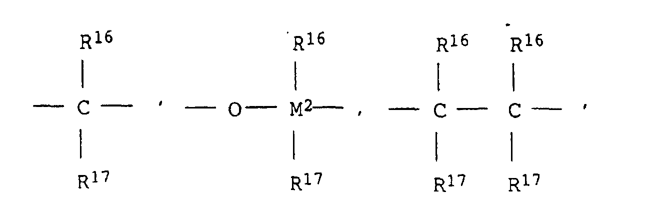 = BR¹⁶, = AlR¹⁶, -Ge-, -Sn-, -O-, -S-, = SO, = SO₂, = NR¹⁶, = CO, = PR¹⁶ oder = P(O)R¹⁶ ist,
   wobei
   - R¹⁶, R¹⁷ und R¹⁸: gleich oder verschieden sind und ein Wasserstoffatom, ein Halogenatom, eine C₁-C₁₀-Alkylgruppe, eine C₁-C₁₀-Fluoralkylgruppe, eine C₆-C₁₀-Fluorarylgruppe, eine C₆-C₁₀-Arylgruppe, eine C₁-C₁₀-Alkoxygruppe, eine C₂-C₁₀-Alkenylgruppe, eine C₇-C₄₀-Arylalkylgruppe, eine C₈-C₄₀-Arylalkenylgruppe oder eine C₇-C₄₀-Alkylarylgruppe bedeuten oder wobei zwei benachbarte Reste jeweils mit den sie verbindenden Atomen einen Ring bilden, und
   - M²: Silicium, Germanium oder Zinn ist,
   - A: 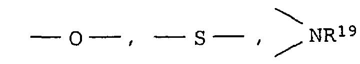 oder 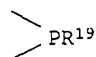 bedeuten, mit
   - R¹⁹: C₁- bis C₁₀-Alkyl, C₆- bis C₁₅-Aryl, C₃- bis C₁₀-Cycloalkyl, Alkylaryl oder Si(R²⁰)₃,
   - R²⁰: Wasserstoff, C₁- bis C₁₀-Alkyl, C₆- bis C₁₅-Aryl, das seinerseits mit C₁- bis C₄-Alkylgruppen substituiert sein kann oder C₃- bis C₁₀-Cycloalkyl
   oder wobei die Reste R⁴ und R¹² gemeinsam eine Gruppierung -R¹⁵- bilden,
   mit einer Aktivatorverbindung, welche mit der Metallocenverbindung I in einer Weise reagieren kann, daß ein Ligand X vom Zentralatom M verdrängt und der entstehende kationische Komplex durch ein nicht koordinierendes Anion als Ionenpaar stabilisiert wird,
b) Zugabe eines oder mehrerer α-Olefine in einem Molverhältnis Metallocenverbindung I: α-Olefin zwischen 1:1 und 1:100 und
c) Mischung mit mindestens 10 Volumenteilen eines aliphatischen Kohlenwasserstoffs.

Weiterhin sind Gegenstand der vorliegenden Erfindung ein Verfahren zur Polymerisation von α-Olefinen in Gegenwart dieser Katalysatorlösung sowie die Verwendung dieser Katalysatorlösung zur Polymerisation von α-Olefinen.

Die kationische Aktivierung von Metallocenkomplexen zu aktiven Katalysatorverbindungen ist in zahlreichen Druckschriften beschrieben worden. Für diese Reaktion wird der Metallocenkomplex mit einer Ionenaustauschkomponente, z. B. einem Kation oder einer Lewis Säure, die in der Lage ist, irreversibel mit einem der Komplexliganden zu reagieren, und einem nichtkoordinierenden Anion, welches den entstehenden kationischen Metallocenkomplex stabilisieren kann, umgesetzt. Die Struktur vieler Metallocenkomplexe, besonders jedoch die Struktur der Aktivierungsreagenzien sowie der im Verlauf der Aktivierung gebildeten Ionenpaare aus kationischem Metallocenkomplex und anionischem nichtkoordinierendem Gegenion macht für diese Umsetzung in der Regel mäßig polare Lösungsmittel erforderlich, beispielsweise aromatische oder halogenierte Kohlenwasserstoffe. So wird in EP-A-709 393 die kationische Aktivierung von Metallocenkomplexen mit substituierten Fluorphenylliganden in Toluol als Lösungsmittel beschrieben. In WO-93/25590 wird ebenfalls die kationische Aktivierung von Metallocenkomplexen beschrieben, wobei für diese Umsetzungen vorzugsweise aromatische Lösungsmittel, insbesondere Toluol (s. Beispiele) verwendet werden. Die ebenfalls für diesen Zweck angeführten geradkettigen, verzweigten oder alicyclischen Kohlenwasserstoffe haben sich im allgemeinen für diesen Zweck als ungeeignet erwiesen, da sie insbesondere die kationischen Metallocenkomplexe sowie die Aktivierungsreagenzien nur unzureichend zu lösen vermögen.

Die kationisch aktivierten Metallocenkomplexe können auch in ungeträgerter Form vorteilhaft in Slurry- oder Lösungspolymerisationsverfahren eingesetzt werden. Als Lösungsmittel für diese Polymerisationsverfahren, insbesondere für Polymerisationsverfahren bei hoher Temperatur und hohem Druck, haben sich besonders aliphatische Lösungsmittel, insbesondere gesättigte Kohlenwasserstoffe, als geeignet erwiesen. Aromatische und halogenierte Kohlenwasserstoffe weisen dagegen Nachteile auf, die vermutlich auf ihre Reaktivität und auf eine Zerstörung oder Blockierung des Katalysators durch diese Verbindungen zurückzuführen sind. Bei Polymerisationen in diesen Lösungsmitteln wird eine geringere Katalysatorproduktivität, ein größerer Bedarf an Alkylverbindungen zur Beseitigung von Verunreinigungen sowie ein erhöhter Anteil von wachsartigen Nebenprodukten in den Polymeren beobachtet. Die mangelhafte Löslichkeit von kationisch aktivierten Metallocenkatalysatoren in aliphatischen Lösungsmitteln machte bisher jedoch meist die Verwendung aromatischer Lösungsmittel in solchen Lösungspolymerisationsverfahren erforderlich.

Der vorliegenden Erfindung lag nun die Aufgabe zugrunde, die Löslichkeit kationisch aktivierter Katalysatorkomplexe so zu erhöhen, daß sie ausreichende Löslichkeit in aliphatischen Lösungsmitteln aufweisen.

Demgemäß wurde die eingangs beschriebene Katalysatorlösung zur Polymerisation von α-Olefinen, ein verfahren zur Polymerisation von α-Olefinen in Gegenwart dieser Katalysatorlösung sowie die Verwendung dieser Katalysatorlösung zur Polymerisation von α-olefinen gefunden.

Von den Metallocenkomplexen der allgemeinen Formel I sind 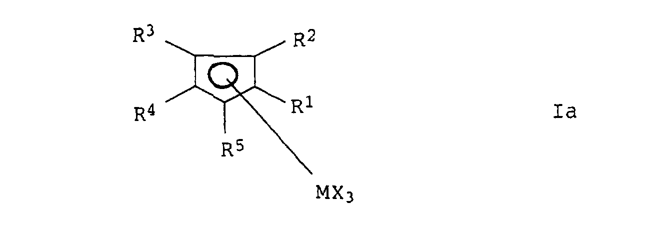 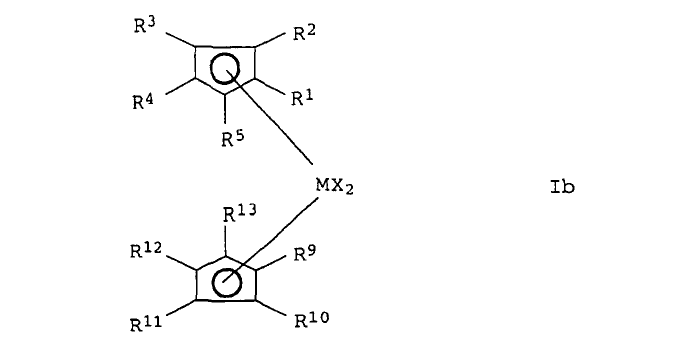 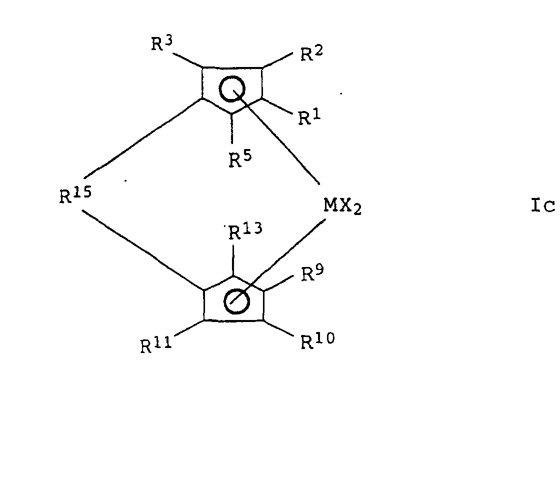 und 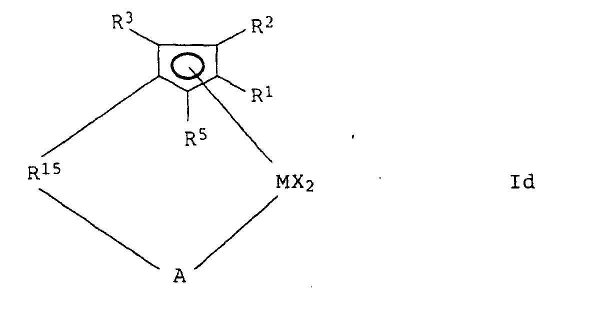 bevorzugt.

Besonders bevorzugt sind solche Übergangsmetallkomplexe, welche zwei miteinander verbrückte aromatische Ringsysteme als Liganden enthalten, also besonders die Übergangsmetallkomplexe der allgemeinen Formel Ic.

Die Reste X können gleich oder verschieden sein, bevorzugt sind sie gleich.

Von den Verbindungen der Formel Ia sind insbesondere diejenigen bevorzugt, in denen
- M: Titan, Zirkonium oder Hafnium,
- X: C₁-bis C₄-Alkyl oder Phenyl und
- R¹ bis R⁵: Wasserstoff oder C₁- bis C₄-Alkyl bedeuten.

Von den Verbindungen der Formel Ib sind als bevorzugt diejenigen zu nennen, bei denen
- M: für Titan, Zirkonium oder Hafnium steht,
- X: für C₁-bis C₄-Alkyl oder Phenyl,
- R¹ bis R⁵: Wasserstoff, C₁- bis C₄-Alkyl oder Si(R⁸)₃,
- R⁹ bis R¹³: Wasserstoff, C₁- bis C₄-Alkyl oder Si(R¹⁴)₃ bedeuten.

Insbesondere sind die Verbindungen der Formel Ib geeignet, in denen die Cyclopentadienylreste gleich sind.

Beispiele für besonders geeignete Verbindungen sind u.a. solche Verbindungen, die sich von den folgenden Verbindungen II ableiten:
Bis(cyclopentadienyl)zirkoniumdichlorid,
Bis(pentamethylcyclopentadienyl)-zirkoniumdichlorid,
Bis(methylcyclopentadienyl)-zirkoniumdichlorid,
Bis(ethylcyclopentadienyl)-zirkoniumdichlorid,
Bis(n-butylcyclopentadienyl)-zirkoniumdichlorid und
Bis(trimethylsilylcyclopentadienyl)-zirkoniumdichlorid
sowie die entsprechenden Dimethylzirkoniumverbindungen.

Von den Verbindungen der Formel Ic sind diejenigen besonders geeignet, in denen
- R¹ und R⁹: gleich sind und für Wasserstoff oder C₁- bis C₁₀-Alkylgruppen stehen,
- R⁵ und R¹³: gleich sind und für Wasserstoff, eine Methyl-, Ethyl-, iso-Propyl- oder tert.-Butylgruppe stehen
- R², R³, R¹⁰ und R¹¹: die Bedeutung
R³ und R¹¹ C₁- bis C₄-Alkyl
R² und R¹⁰ Wasserstoff
haben oder zwei benachbarte Reste R² und R³ sowie R¹⁰ und R¹¹ gemeinsam für 4 bis 12 C-Atome aufweisende cyclische Gruppen stehen,
- R¹⁵: für 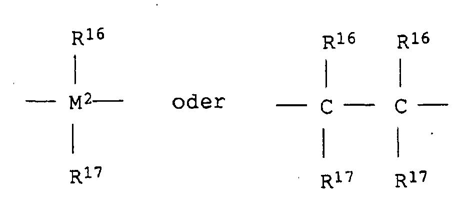 steht,
- M: für Titan, Zirkonium oder Hafnium und
- X: für C₁-bis C₄-Alkyl oder Phenyl stehen.

Beispiele für besonders geeignete Komplexverbindungen sind u.a. solche, die sich von den folgenden Verbindungen II ableiten: Dimethylsilandiylbis(cyclopentadienyl)-zirkoniumdichlorid, Dimethylsilandiylbis(indenyl)-zirkoniumdichlorid, Dimethylsilandiylbis(tetrahydroindenyl)-zirkoniumdichlorid, Ethylenbis(cyclopentadienyl)-zirkoniumdichlorid, Ethylenbis(indenyl)-zirkoniumdichlorid, Ethylenbis(tetrahydroindenyl)-zirkoniumdichlorid, Tetramethylethylen-9-fluorenylcyclopentadienylzirkoniumdichlorid, Dimethylsilandiylbis(-3-tert.butyl-5-methylcyclopentadienyl)-zirkoniumdichlorid, Dimethylsilandiylbis(-3-tert.butyl-5-ethylcyclopentadienyl)-zirkoniumdichlorid, Dimethylsilandiylbis(-2-methylindenyl)-zirkoniumdichlorid, Dimethylsilandiylbis(-2-isopropylindenyl)-zirkoniumdichlorid, Dimethylsilandiylbis(-2-tert.butylindenyl)-zirkoniumdichlorid, Diethylsilandiylbis(-2-methylindenyl)-zirkoniumdibromid, Dimethylsilandiylbis(-3-methyl-5-methylcyclopentadienyl)-zirkoniumdichlorid, Dimethylsilandiylbis(-3-ethyl-5-isopropylcyclopentadienyl)-zirkoniumdichlorid, Dimethylsilandiylbis(-2-methylindenyl)-zirkoniumdichlorid, Dimethylsilandiylbis(-2-methylbenzindenyl)-zirkoniumdichlorid Dimethylsilandiylbis(2-ethylbenzindenyl)zirkoniumdichlorid, Methylphenylsilandiylbis(2-ethylbenzindenyl)zirkoniumdichlorid, Methylphenylsilandiylbis(2-methylbenzindenyl)zirkoniumdichlorid, Diphenylsilandiylbis(2-methylbenzindenyl)zirkoniumdichlorid, Diphenylsilandiylbis(2-ethylbenzindenyl)zirkoniumdichlorid, und Dimethylsilandiylbis(-2-methylindenyl)-hafniumdichlorid sowie die entsprechenden Dimethylzirkoniumverbindungen.

Bei den Verbindungen der allgemeinen Formel Id sind als besonders geeignet diejenigen zu nennen, in denen
- M: für Titan oder Zirkonium,
- X: für C₁-bis C₄-Alkyl oder Phenyl stehen.
- R¹⁵: für 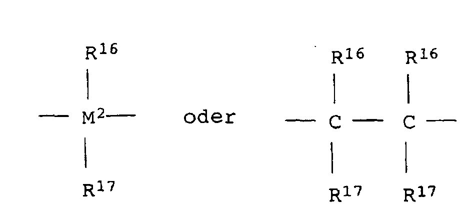 steht,
- A: für 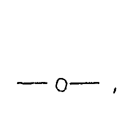 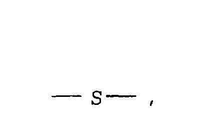 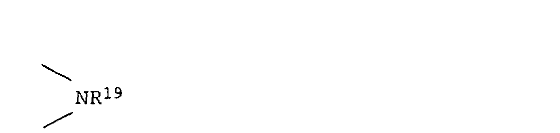
und
- R¹ bis R³ und R⁵: für Wasserstoff, C₁- bis C₁₀-Alkyl, C₃- bis C₁₀-Cycloalkyl, C₆- bis C₁₅-Aryl oder Si(R⁸)₃ stehen, oder wobei zwei benachbarte Reste für 4 bis 12 C-Atome aufweisende cyclische Gruppen stehen.

Die Synthese derartiger Komplexverbindungen kann nach an sich bekannten Methoden erfolgen, wobei die Umsetzung der entsprechend substituierten, cyclischen Kohlenwasserstoffanionen mit Halogeniden von Titan, Zirkonium, Hafnium, Vanadium, Niob oder Tantal, bevorzugt ist.

Beispiele für entsprechende Herstellungsverfahren sind u.a. im Journal of Organometallic Chemistry, 369 (1989), 359-370 beschrieben.

Es können auch Mischungen verschiedener Metallocenkomplexe eingesetzt werden.

Geeignete Aktivatorverbindungen sind starke, neutrale Lewissäuren, ionische Verbindungen mit lewissauren Kationen und ionische Verbindungen mit Brönsted-Säuren als Kation.

Als starke, neutrale Lewissäuren sind Verbindungen der allgemeinen Formel III

M³X¹X²X³ III

bevorzugt, in der
- M³: ein Element der III. Hauptgruppe des Periodensystems bedeutet, insbesondere B, Al oder Ga, vorzugsweise B,
- X¹, X² und X³: für Wasserstoff, C1- bis C10-Alkyl, C6- bis C15-Aryl, Alkylaryl, Arylalkyl, Halogenalkyl oder Halogenaryl mit jeweils 1 bis 10 C-Atomen im Alkylrest und 6 bis 20 C-Atome im Arylrest oder Fluor, Chlor, Brom oder Jod stehen, insbesondere für Halogenaryle, vorzugsweise für Pentafluorphenyl.

Besonders bevorzugt sind Verbindungen der allgemeinen Formel III, in der X¹, X² und X³ gleich sind, vorzugsweise Tris(pentafluorphenyl)boran.

Als ionische Verbindungen mit lewissauren Kationen sind Verbindungen der allgemeinen Formel IV

[(M^{4a+})Q₁Q₂...Q_{z}]^{d+} IV

geeignet, in denen
- M⁴: ein Element der I. bis VI. Hauptgruppe oder der I. bis VIII. Nebengruppe des Periodensystems bedeutet,
- Q₁ bis Q_{z}: für einfach negativ geladene Reste wie C₁- bis C₂₈-Alkyl, C₆- bis C₁₅-Aryl, Alkylaryl, Arylalkyl, Halogenalkyl, Halogenaryl mit jeweils 6 bis 20 C-Atomen im Aryl- und 1 bis 28 C-Atome im Alkylrest, C₁- bis C₁₀-Cycloalkyl, welches gegebenenfalls mit C₁- bis C₁₀-Alkylgruppen substituiert sein kann, Halogen, C₁- bis C₂₈-Alkoxy, C₆- bis C₁₅-Aryloxy, Silyl- oder Mercaptylgruppen
- a: für ganze Zahlen von 1 bis 6 steht
- z: für ganze Zahlen von 0 bis 5
- d: der Differenz a-z entspricht, wobei d jedoch größer oder gleich 1 ist.

Besonders geeignet sind Carboniumkationen, Oxoniumkationen und Sulfoniumkationen sowie kationische Übergangsmetallkomplexe. Insbesondere sind das Triphenylmethylkation, das Silberkation und das 1,1'-Dimethylferrocenylkation zu nennen. Bevorzugt besitzen sie nicht koordinierende Gegenionen, insbesondere Borverbindungen, wie sie auch in der WO 91/09882 genannt werden, bevorzugt Tetrakis(pentafluorophenyl)borat.

Ionische Verbindungen mit Brönsted-Säuren als Kationen und ebenfalls nicht koordinierenden Gegenionen sind in der WO 91/09882 genannt, bevorzugtes Kation ist das N,N-Dimethylanilinium-Kation.

Die Löslichkeit der kationisch aktivierten Metallocenverbindung in aliphatischen Lösungsmitteln wird durch den Reaktionsschritt b), also durch Umsetzung mit einer geringen Menge eines oder mehrerer α-Olefine drastisch erhöht. Als α-Olefine können die verschiedensten α-Olefine eingesetzt werden, vorzugsweise solche mit 2 bis 20 C-Atomen. Diese α-Olefin können geradkettig oder verzweigt sein. Besonders bevorzugt werden Buten, Hexen oder Okten zugesetzt. von allen genannten α-Olefinen können auch Gemische eingesetzt werden.

Die α-Olefine werden entweder in äquimolarem Verhältnis oder in bis zu hundertfachem Überschuß zur Metaliocenverbindung I eingesetzt. Schon ein geringer Überschuß an α-Olefinen bewirkt eine deutliche Erhöhung der Löslichkeit des Komplexes in aliphatischen Lösungsmitteln. Insbesondere bei längerkettigen α-Olefinen, etwa mit 6 bis 12 C-Atomen ist ein äquimolarer Zusatz oft ausreichend, bei kürzeren α-Olefinen empfiehlt sich ein Überschuß. vorzugsweise liegt das Molverhältnis Metallocenverbindung I : α-Olefin im Schritt b) zwischen 1 : 1 und 1 : 10.

Für den Umsetzungsschritt a) d. h. für die Aktivierung des Metallocenkomplexes I ist meist ein mäßig polares Lösungsmittel erforderlich, um alle Reaktionskomponenten in möglichst geringem Volumen ausreichend in Lösung zu halten. Vorzugsweise wird der Herstellschritt a) in Gegenwart eines aromatischen oder halogenierten Kohlenwasserstoffes vorgenommen, besonders bevorzugt in Gegenwart von Toluol oder Xylol.

Die Umsetzung mit dem α-Olefin führt man im allgemeinen bei Temperaturen zwischen -90 bis 150°C, vorzugsweise bei 30 bis 110°C durch, wobei die Reaktionszeit mindestens 0,1 sec. beträgt.

Nach der Aktivierung des Metallocenkomplexes I und der Umsetzung mit dem α-Olefin wird die Reaktionsmischung mit mindestens 10 Volumenteilen eines aliphatischen Kohlenwasserstoffs vermischt. Diese Mischung kann direkt in Verbindung mit der folgenden Polymerisationsreaktion erfolgen, also z. B. indem die Reaktionsmischung nach Schritt b) in ein Polymerisationsgefäß eingebracht wird und dort entsprechend verdünnt wird. Dabei kann diese Verdünnung vor Zugabe des zu polymerisierenden Olefins erfolgen, es kann jedoch auch eine Olefin/Lösungsmittelmischung vorgelegt werden, so daß die Polymerisation gleichzeitig mit der Verdünnung des Reaktionsgemisches aus Schritt b) beginnen kann. Es ist jedoch auch möglich und aus praktischen Gründen oft vorteilhaft, die Verdünnung des Reaktionsgemisches aus Schritt b) zuerst nur mit der entsprechenden Menge des aliphatischen Lösungsmittels durchzuführen. Auf diese Weise erhält man eine lagerfähige, aktive Katalysatorlösung, welche zu einem späteren Zeitpunkt in üblicher Weise für Polymerisationsreaktionen verwendet werden kann.

Um die Vorteile der erfindungsgemäßen Katalysatorlösung in vollem Umfang zur Geltung zu bringen, muß das Reaktionsgemisch aus Schritt b) bis zum Einsatz im späteren Polymerisationsprozeß mindestens mit 10 Volumenteilen eines aliphatischen Kohlenwasserstoffs vermischt werden. Ein noch größeres Verdünnungsvolumen kann aus prozeßtechnischen Gründen vorteilhaft sein. Gute Ergebnisse werden in jedem Fall durch Verdünnung mit 10 bis 1000, vorzugsweise mit 10 bis 100 Volumenteilen erzielt. Unter Kohlenwasserstoff sollen in diesem Zusammenhang auch Gemische verschiedener Kohlenwasserstoffe verstanden werden.

Die Metallocenverbindung I kann in verschiedener dem Fachmann geläufiger Art und Weise hergestellt werden. Eine vorteilhafte Synthese geht von Metallocenverbindungen der allgemeinen Formel II aus. Besonders vorteilhaft ist es, wenn die Umsetzung zur Erzeugung der Metallocenverbindung I in situ, durch Umsetzung einer Metallocenverbindung der allgemeinen Formel II 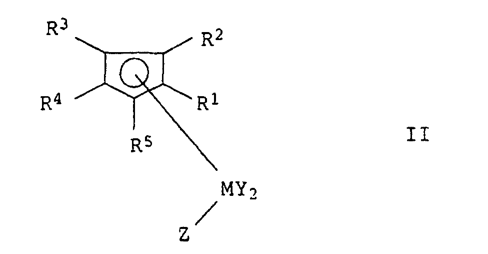 in der R¹, R², R³, R⁴, R⁵, M und Z die oben genannte Bedeutung haben und
- Y: Fluor, Chlor, Brom oder Jod
bedeutet, mit einem entsprechenden Alkyl eines Metalls der 1., 2. oder 3. Hauptgruppe des Periodensystems vorgenommen wird und die entstehende Lösung ohne Aufreinigung weiter nach Schritt a) umgesetzt wird.

Als Alkyl eines Metalls der 1., 2 oder 3. Hauptgruppe des Periodensystems kommen dabei alle üblicherweise zur Alkylierung von Metallocenkomplexen verwendeten Alkylverbindungen in Betracht, vorzugsweise werden dazu Aluminiumalkyle eingesetzt, wie Triisobutylaluminium.

Die erfindungsgemäße Katalysatorlösung läßt sich in allen üblichen Polymerisationsverfahren zur Polymerisation oder Copolymerisation von α-Olefinen, gegebenenfalls auch mit anderen vinylischen Monomeren, einsetzen. Auch eine Verwendung zur Herstellung von geträgerten Katalysatoren ist möglich. Besonders zur Geltung kommen die Vorteile der erfindungsgemäßen Katalysatorlösung jedoch bei Verfahren zur Polymerisation von α-Olefinen in Gegenwart dieser Katalysatorlösung, bei welchen man die Polymerisation in Lösung mit einem im wesentlichen aliphatischen Lösungsmittel durchführt.

Als Lösungsmittel kommen dabei sowohl reine Kohlenwasserstoffe als auch Kohlenwasserstoffgemische in Betracht. Zu nennen sind beispielsweise Hexan, Heptan, Octan, Nonan Decan, Dodecan und Isododecan, wobei geradkettige wie verzweigte Isomere sowie deren Mischungen eingesetzt werden können.

Die erfindungsgemäße Katalysatorlösung läßt sich besonders vorteilhaft in Lösungspolymerisationen, z. B. in Autoklavenverfahren und in Hochdruckverfahren einsetzen, wobei letztere vorzugsweise in Rohrreaktoren durchgeführt werden.

Bevorzugt sind Verfahren zur Polymerisation von α-Olefinen, bei denen man die Polymerisation bei Temperaturen zwischen 160 und 350°C und Drücken zwischen 500 und 3500 bar durchführt. Besonders bevorzugte Temperaturen für diese Verfahren liegen zwischen 180 und 240°C, besonders bevorzugte Drücke zwischen 1400 und 2000 bar. Weitere Details zur Durchführung derartiger Polymerisationen in Hochdruckreaktoren werden z. B. in "Ullmann's Encyklopädie der technischen Chemie", Verlag Chemie, Weinheim, Band 19, (1980), Seiten 169 bis 195, beschrieben.

Nach den erfindungsgemäßen Polymerisationsverfahren lassen sich verschiedene α-Olefine polymerisieren, wobei unter Polymerisation hier sowohl Homopolymerisationen als auch Copolymerisationen unterschiedlicher α-Olefine oder von α-Olefinen mit anderen vinylischen Comonomeren, wie etwa Styrol, verstanden werden soll. Besonders geeignet ist die Katalysatorlösung zum Einsatz in Verfahren zur Polymerisation von α-Olefinen, bei denen als α-Olefin Ethylen oder ein Gemisch aus Ethylen und untergeordneten Mengen weiterer C₁-C₈-α-Olefine eingesetzt wird. Diese C₁-C₈-α-Olefine sind im allgemeinen in Mengen von 0,5 - 10 Gew.-% in den entsprechenden Copolymeren enthalten.

Die Verwendung der erfindungsgemäßen Katalysatorlösung zur Polymerisation von α-Olefinen weist verschiedene Vorteile auf: durch die Löslichkeit und Mischbarkeit mit aliphatischen Lösungsmitteln kann auf die Anwesenheit größerer Mengen aromatischer oder halogenierter Lösungsmittel verzichtet werden. Der Katalysatorkomplex ist dadurch stabiler und langlebiger. Es werden weniger Abbruchreaktionen und damit geringere Anteile wachsartiger Polymerer in den Polymerisaten beobachtet. Die erhaltenen Polymerisate zeichnen sich daher durch besonders gute Homogenität aus. Außerdem zeigen die erfindungsgemäßen Katalysatorlösungen bessere Produktivitäten als entsprechende Katalysatorlösungen auf Toluolbasis.

Die folgenden Beispiele verdeutlichen die Vorteile der Erfindung:

### Beispiele:

### Herstellung der erfindungsgemäßen Katalysatorlösungen:

### Beispiel 1:

Zu einer Lösung von bis(n-BuCp)ZrCl₂ (20 mmol) in 2 L Toloul wurden 200 mmol Triisobutylaluminium (TIBA) (2 M Lösung in Heptan) gegeben und 1 h bei 20°C gerührt.

Danach wurden 24 mmol N,N-Dimethylanilinium-tetrakis(pentafluorphenyl)-borat dazugegeben und 15 min gerührt. Zu dieser Lösung wurden 40 mmol 1-Okten gegeben und weitere 15 min gerührt. Die entstandene Lösung wurde mit 2 L Isododecan verdünnt, der gebildete Niederschlag durch Dekantierung abgetrennt, und der Überstand wurde mit 48 L Isododecan verdünnt.

### Beispiel 2

Analog zu Beispiel 1 wurde eine Katalysatorlösung ausgehend von Diphenylmethylen(cyclopentadienyl)(2,7-di-tert-butyl-fluorenyl)zirkondichlorid hergestellt.

### Beispiel 3

Analog zu Beispiel 1 wurde eine Katalysatorlösung ausgehend von (tert-Butylamido)dimethyl(tetramethyl-η⁵-cyclopentadienyl)silantitan-dichlorid hergestellt.

Herstellung nicht erfindungsgemäßer Vergleichskatalysatorlösungen:

### V-1

Analog zu Beispiel 1 wurden 20 mmol bis(n-BuCp)ZrCl₂ kationisch aktiviert. Nach der Umsetzung mit der Boratlösung wurde die erhaltene Lösung mit 48 l Toluol verdünnt.

### V-2

Analog zu V-1 wurde der Metallocenkomplex von Beispiel 2 (Diphenylmethylen(cyclopentadienyl) (2,7-di-tert-butyl-fluorenyl)zirkondichlorid) umgesetzt.

### V-3

Analog zu V-1 wurde der Metallocenkomplex von Beispiel 3 (tert.-Butylamido)dimethyl(tetramethyl-η⁵-cyclopentadienyl)silan-titandichlorid) umgesetzt.

### Polymerisationsversuche

### Beispiel 4 (Lösungspolymerisation)

In einen mit 1,2 l Isododecan gefüllten 2-l-Autoklaven wurde Ethylen unter einem Druck von 20 kg/cm² gepresst. Die Lösung wurde bei 50°C thermosiatisiert. 5 ml der Katalysatorlösung aus Beispiel 1 wurden mit Argon in den Autoklaven gedrückt, die resultierende Lösung wurde 20 min gerührt. Das entstandene Polymer wurde 6 h bei 100°C unter vermindertem Druck getrocknet.

### V-4 (nicht erfindungsgemäßer Vergleichsversuch)

Analog zu Beispiel 4 wurde eine Polymerisation mit der Katalysatorlösung aus V-1 durchgeführt.

### Beispiele 5 - 7 (Polymerisation im Hochdruckreaktor)

In einem Hochdruckrohrreaktor mit einem L/D-Verhältnis von 1333 wurden bei 210°C und 1700 bar Polymerisacionen durchgeführt. Die Katalysatorlösung wurde am Anfang des Reaktors in einer Konzentration von 7,59 · 10⁻² Mmol Katalysatorkomplex/mol Olefin zudosiert.

In Beispiel 5 wurde nur Ethylen eingespeist, in den Beispielen 6 und 7 wurde als Comonomer 1-Hexen in einem molaren Comonomerenverhältnis Ethylen/Hexen von 56 zudosiert.

### V5-7 (nichterfindungsgemäße Vergleichsversuche)

Analog zu den Beispielen 5-7 wurden Hochdruckpolymerisationen mit den Katalysatorlösungen von V1-V3 durchgeführt.

**Tabelle:**

| Ergebnisse der Polymerisationsversuche | | | | | | |
|---|---|---|---|---|---|---|
| Beisp. | Katalysatorlösung | Katalysatorproduktivität kg Polymer/ g Metallocen | MFI (190/2,16 g/10 min | M_{w}/Mₙ | Dichte g/cm³ | Wachsanteil*Gew.-% |
| B-4 | B-1 | 109,8 | 2,9 | 2,0 | 0,9442 | 1,33 |
| B-5 | B-1 | 153,0 | 15 | 2,2 | 0,9584 | 1,81 |
| B-6 | B-2 | 105 | 7,6 | 1,9 | 0,9383 | 1,28 |
| B-7 | B-3 | 108 | 0,8 | 2,0 | 0,9278 | 1,20 |
| V-4 | V-1 | 102,8 | 3,4 | 2,1 | 0,9430 | 10,40 |
| V-5 | V-1 | 73,5 | 43 | 2,6 | 0,9563 | 12,63 |
| V-6 | V-2 | 89,1 | 5,7 | 2,2 | 0,9377 | 10,88 |
| V-7 | V-3 | 91,4 | 1,4 | 2,0 | 0,9312 | 9,53 |

| | | | | | | |
|---|---|---|---|---|---|---|
| * Der Wachsanteil wurde durch Gelpermeationschromatographie in 1,2,4-Trichlorbenzol bei 140°C bestimmt. | | | | | | |

## Patentansprüche

1. Katalysatorlösung zur Polymerisation von α-Olefinen, erhältlich durch
a) Umsetzung einer Metallocenverbindung der allgemeinen Formel I 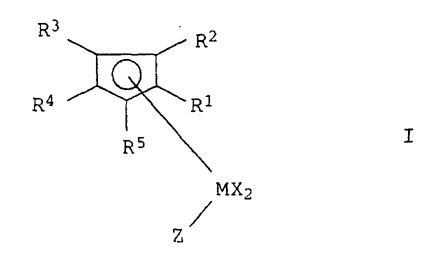 in der die Substituenten folgende Bedeutung haben:
M Titan, Zirkonium, Hafnium, Vanadium, Niob oder Tantal
X Wasserstoff, C₁- bis C₁₀-Alkyl, C₆- bis C₁₅-Aryl, Alkylaryl mit 1 bis 10 C-Atomen im Alkylrest und 6 bis 20 C-Atomen im Arylrest, -OR⁶ oder -NR⁶R⁷,
wobei
R⁶ und R⁷ C₁- bis C₁₀-Alkyl, C₆- bis C₁₅-Aryl, Alkylaryl, Arylalkyl, Fluoralkyl oder Fluoraryl mit jeweils 1 bis 10 C-Atomen im Alkylrest und 6 bis 20 C-Atomen im Arylrest bedeuten,
R¹ bis R⁵ Wasserstoff, C₁- bis C₁₀-Alkyl, 5- bis 7-gliedriges Cycloalkyl, das seinerseits ein C₁- bis C₁₀-Alkyl als Substituent tragen kann, C₆- bis C₁₅-Aryl oder Arylalkyl, wobei gegebenenfalls auch zwei benachbarte Reste gemeinsam für 4 bis 15 C-Atome aufweisende gesättigte oder ungesättigte cyclische Gruppen stehen können, oder Si(R⁸)₃ mit
R⁸ C₁ - bis C₁₀-Alkyl, C₃- bis C₁₀-Cycloalkyl oder C₆- bis C₁₅-Aryl,
Z für X oder 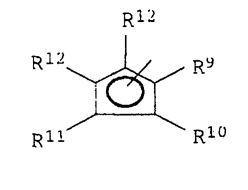 steht,
wobei die Reste
R⁹ bis R¹³ Wasserstoff, C₁- bis C₁₀-Alkyl, 5- bis 7-gliedriges Cycloalkyl, das seinerseits ein C₁- bis C₁₀-Alkyl als Substituent tragen kann, C₆- bis C₁₅-Aryl oder Arylalkyl bedeuten und wobei gegebenenfalls auch zwei benachbarte Reste gemeinsam für 4 bis 15 C-Atome aufweisende gesättigte oder ungesättigte cyclische Gruppen stehen können, oder Si(R¹⁴)₃ mit
R¹⁴ C₁- bis C₁₀-Alkyl, C₆- bis C₁₅-Aryl oder C₃- bis C₁₀-Cycloalkyl,
oder wobei die Reste R⁴ und Z gemeinsam eine Gruppierung - R¹⁵-A- bilden, in der
R¹⁵ 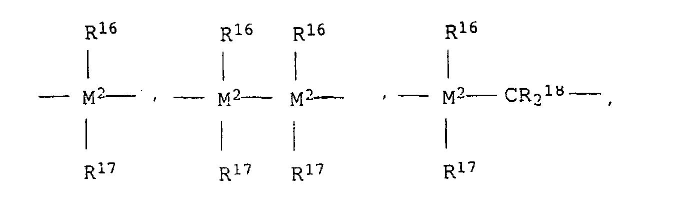 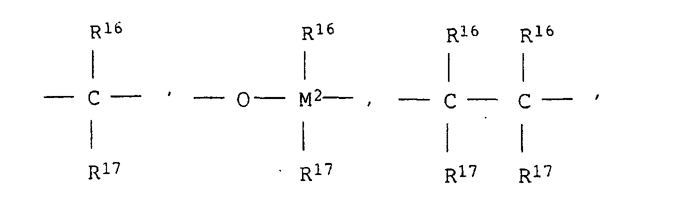 = BR¹⁶, = AlR¹⁶, -Ge-, -Sn-, -O-, -S-, = SO, = SO₂, = NR¹⁶, = CO, = PR¹⁶ oder = P(O)R¹⁶ ist,
wobei
R¹⁶, R¹⁷ und R¹⁸ gleich oder verschieden sind und ein Wasserstoffatom, ein Halogenatom, eine C₁-C₁₀-Alkylgruppe, eine C₁-C₁₀-Fluoralkylgruppe, eine C₆-C₁₀-Fluorarylgruppe, eine C₆-C₁₀-Arylgruppe, eine C₁-C₁₀-Alkoxygruppe, eine C₂-C₁₀-Alkenylgruppe, eine C₇-C₄₀-Arylalkylgruppe, eine C₈-C₄₀-Arylalkenylgruppe oder eine C₇-C₄₀-Alkylarylgruppe bedeuten oder wobei zwei benachbarte Resce jeweils mit den sie verbindenden Atomen einen Ring bilden, und
M² Silicium, Germanium oder Zinn ist,
A -O-, -S-, 〉NR¹⁹ oder 〉PR¹⁹ bedeuten, mit
R¹⁹ C₁- bis C₁₀-Alkyl, C₆- bis C₁₅-Aryl, C₃- bis C₁₀-Cycloalkyl, Alkylaryl oder Si(R²⁰)₃,
R²⁰ Wasserstoff, C₁- bis C₁₀-Alkyl, C₆- bis C₁₅-Aryl, das seinerseits mit C₁- bis C₄-Alkylgruppen substituiert sein kann oder C₃- bis C₁₀-Cycloalkyl
oder wobei die Reste R⁴ und R¹² gemeinsam eine Gruppierung -R¹⁵- bilden,
mit einer Aktivatorverbindung, welche mit der Metallocenverbindung I in einer Weise reagieren kann, daß ein Ligand X vom Zentralatom M verdrängt und der entstehende kationische Komplex durch ein nicht koordinierendes Anion als Ionenpaar stabilisiert wird,
b) Zugabe eines oder mehrerer α-Olefine in einem Molverhältnis Metallocenverbindung I: α-Olefin zwischen 1:1 und 1:100 und
c) Mischung mit mindestens 10 Volumenteilen eines aliphatischen Kohlenwasserstoffs.

2. Katalysatorlösung nach Anspruch 1, **dadurch gekennzeichnet, daß** Herstellschritt a) in Gegenwart eines aromatischen oder halogenierten Kohlenwasserstoffs als Lösungsmittel vorgenommen wird.

3. Katalysatorlösung nach Anspruch 1 oder 2, **dadurch gekennzeichnet, daß** die Erzeugung der Metallocenverbindung I in -situ durch Umsetzung einer Metallocenverbindung der allgemeinen Formel II 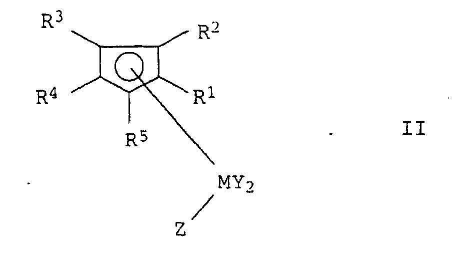 in der R¹, R², R³, R⁴, R⁵, M und Z die oben genannte Bedeutung haben und
Y Fluor, Chlor, Brom oder Jod
bedeutet, mit einem entsprechenden Alkyl eines Metalls der 1., 2. oder 3. Hauptgruppe des Periodensystems vorgenommen wird und die entstehende Lösung ohne Aufreinigung weiter nach Schritt a) umgesetzt wird.

4. Katalysatorlösung nach Anspruch 3 **dadurch gekennzeichnet, daß** als Metallalkyl ein Aluminiumalkyl eingesetzt wird.

5. Katalysatorlösung nach den Ansprüchen 1 bis 4, **dadurch gekennzeichnet, daß** das Molverhältnis Metallocenverbindung I: α-Olefin im Schritt b) zwischen 1 : 1 und 1 : 10 liegt.

6. Katalysatorlösung nach den Ansprüchen 1 bis 5, **dadurch gekennzeichnet, daß** das im Schritt b) zugesetzte α-Olefin Buten, Hexen oder Okten ist.

7. Verfahren zur Polymerisation von α-Olefinen in Gegenwart einer Katalysatorlösung gemäß den Ansprüchen 1 bis 6, **dadurch gekennzeichnet, daß** man die Polymerisation in Lösung mit einem im wesentlichen aliphatischen Lösungsmittel durchführt.

8. Verfahren zur Polymerisation von α-Olefinen nach Anspruch 7, **dadurch gekennzeichnet, daß** man die Polymerisation bei Temperaturen zwischen 160 und 350°C und Drücken zwischen 500 und 3500 bar durchführt.

9. Verfahren zur Polymerisation von α-Olefinen nach Anspruch 7 oder 8, **dadurch gekennzeichnet, daß** als α-Olefin Ethylen oder ein Gemisch aus Ethylen und untergeordneten Mengen weiterer C₁-C₈-α-Olefine eingesetzt wird.

10. Verwendung einer Katalysatorlösung gemäß den Ansprüchen 1 bis 6 zur Polymerisation von α-Olefinen.

## Claims

1. A catalyst solution for polymerizing α-olefins, obtainable by
a) reacting a metallocene compound of the formula I 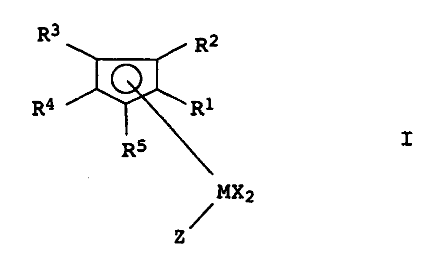 where the substituents have the following meanings:
M is titanium, zirconium, hafnium, vanadium, niobium or tantalum
X is hydrogen, C₁-C₁₀-alkyl, C₆-C₁₅-aryl, alkylaryl having from 1 to 10 carbon atoms in the alkyl radical and from 6 to 20 carbon atoms in the aryl radical, -OR⁶ or -NR⁶R⁷,
where
R⁶ and R⁷ are C₁-C₁₀-alkyl, C₆-C₁₅-aryl, alkylaryl, arylalkyl, fluoroalkyl or fluoroaryl each having from 1 to 10 carbon atoms in the alkyl radical and from 6 to 20 carbon atoms in the aryl radical,
R¹ to R⁵ are hydrogen, C₁-C₁₀-alkyl, 5- to 7-membered cycloalkyl which may in turn bear a C₁-C₁₀-alkyl as substituent, C₆-C₁₅-aryl or arylalkyl, where two adjacent radicals may also together form a saturated or unsaturated cyclic group having from 4 to 15 carbon atoms, or Si(R⁸)₃ where
R⁸ is C₁-C₁₀-alkyl, C₃-C₁₀-cycloalkyl or C₆-C₁₅-aryl,
Z is X or 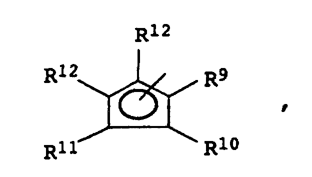
where the radicals
R⁹ to R¹³ are hydrogen, C₁-C₁₀-alkyl, 5- to 7-membered cycloalkyl which may in turn bear a C₁-C₁₀-alkyl as substituent, C₆-C₁₅-aryl or arylalkyl, where two adjacent radicals may also together form a saturated or unsaturated cyclic group having from 4 to 15 carbon atoms, or Si(R¹⁴)₃ where
R¹⁴ is C₁-C₁₀-alkyl, C₆-C₁₅-aryl or C₃-C₁₀-cycloalkyl,
or where the radicals R⁴ and Z together form an -R¹⁵-A- group in which
R¹⁵ is 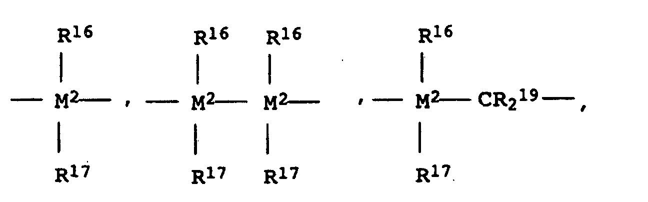 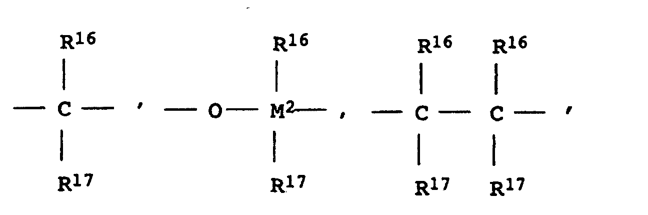 = BR¹⁶, = AlR¹⁶, -Ge-, -Sn-, -O-, -S-, = SO, = SO₂, = NR¹⁶, = CO, = PR¹⁶ or = P(O)R¹⁶,
where
R¹⁶, R¹⁷ and R¹⁸ are identical or different and are each a hydrogen atom, a halogen atom, a C₁-C₁₀-alkyl group, a C₁-C₁₀-fluoroalkyl group, a C₆-C₁₀-fluoroaryl group, a C₆-C₁₀-aryl group, a C₁-C₁₀-alkoxy group, a C₂-C₁₀-alkenyl group, a C₇-C₄₀-arylalkyl group, a C₈-C₄₀-arylalkenyl group or a C₇-C₄₀-alkylaryl group or two adjacent radicals together with the atoms connecting them form a ring, and
M² is silicon, germanium or tin,
A is -O-, -S-, 〉NR¹⁹ or 〉PR¹⁹, where
R¹⁹ is C₁-C₁₀-alkyl, C₆-C₁₅-aryl, C₃-C₁₀-cycloalkyl, alkylaryl or Si(R²⁰)₃,
R²⁰ is hydrogen, C₁-C₁₀-alkyl, C₆-C₁₅-aryl which may in turn bear C₁-C₄-alkyl groups as substituents or C₃-C₁₀-cycloalkyl
or the radicals R⁴ and R¹² together form an -R¹⁵- group,
with an activator compound which can react with the metallocene compound I so as to displace a ligand X from the central atom M and to stabilize the resulting cationic complex by means of a non-coordinating anion as ion pair,
b) adding one or more α-olefins in a molar ratio of metallocene compound I: α-olefin of from 1:1 to 1:100 and
c) mixing with at least 10 parts by volume of an aliphatic hydrocarbon.

2. A catalyst solution as claimed in claim 1, wherein the preparative step a) is carried out in the presence of an aromatic or halogenated hydrocarbon as solvent.

3. A catalyst solution as claimed in claim 1 or 2, wherein the metallocene compound I is produced in situ by reacting a metallocene compound of the formula II 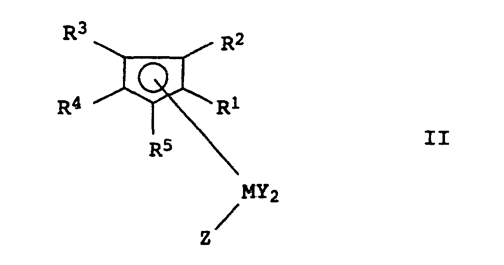 where R¹, R², R³, R⁴, R⁵, M and Z are as defined above and
Y is fluorine, chlorine, bromine or iodine,
with an appropriate alkyl of a metal of main group I, II or III of the Periodic Table and the resulting solution is reacted further in step a) without purification.

4. A catalyst solution as claimed in claim 3, wherein the metal alkyl used is an aluminium alkyl.

5. A catalyst solution as claimed in any of claims 1 to 4, wherein the molar ratio of metallocene compound I: α-olefin in step b) is from 1 : 1 to 1 : 10.

6. A catalyst solution as claimed in any of claims 1 to 5, wherein the α-olefin added in step b) is butene, hexene or octene.

7. A process for polymerizing α-olefins in the presence of a catalyst solution as claimed in any of claims 1 to 6, wherein the polymerization is carried out in solution using an essentially aliphatic solvent.

8. A process for polymerizing α-olefins as claimed in claim 7, wherein the polymerization is carried out at from 160 to 350°C and at pressures of from 500 to 3500 bar.

9. A process for polymerizing α-olefins as claimed in claim 7 or 8, wherein the α-olefin used is ethylene or a mixture of ethylene and subordinate amounts of further C₁-C₈-α-olefins.

10. The use of a catalyst solution as claimed in any of claims 1 to 6 for the polymerization of α-olefins.

## Revendications

1. Solution catalytique pour la polymérisation d'α-oléfines, pouvant être obtenue par
a) réaction d'un composé de métallocène de formule générale I 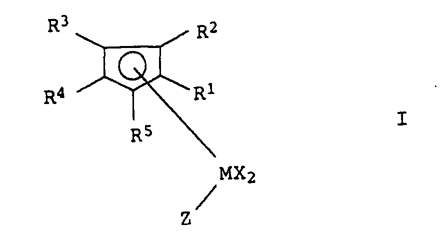 dans laquelle les substituants ont la signification suivante:
M titane, zirconium, hafnium, vanadium, niobium ou tantale,
X hydrogène, alkyle en C₁ à C₁₀, aryle en C₆ à C₁₅, alkylaryle ayant 1 à 10 atomes de carbone dans le reste alkyle et 6 à 20 atomes de carbone dans le reste aryle, -OR⁶ ou -NR⁶R⁷,
tandis que
R⁶ et R⁷ désignent un groupe alkyle en C₁ à C₁₀. aryle en C₆ à C₁₅, alkylaryle, arylalkyle, fluoroalkyle ou fluoroaryle avec à chaque fois 1 à 10 atomes de carbone dans le reste alkyle et 6 à 20 atomes de carbone dans le reste aryle,
R¹ à R⁵ hydrogène, alkyle en C₁ à C₁₀, cycloalkyle à 5 à 7 chaînons, qui peut porter à son tour un alkyle en C₁ à C₁₀ comme substituant, aryle en C₆ à C₁₅ ou arylalkyle, tandis qu'éventuellement également deux restes voisins peuvent former ensemble des groupes cycliques saturés ou insaturés présentant 4 à 15 atomes de carbone, ou Si(R⁸)₃ avec
R⁸ alkyle en C₁ à C₁₀, cycloalkyle en C₃ à C₁₀ ou aryle en C₆ à C₁₅,
Z désigne X ou 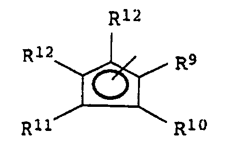
tandis que les restes
R⁹ à R¹³ désignent l'hydrogène ou un groupe alkyle en C₁ à C₁₀, cycloalkyle à 5 à 7 chaînons, qui peut à son tour porter un alkyle en C₁ à C₁₀ comme substituant, aryle en C₆ à C₁₅ ou arylalkyle, et tandis qu'éventuellement également deux restes voisins peuvent former ensemble des groupes cycliques saturés ou insaturés présentant 4 à 15 atomes de carbone, ou Si(R¹⁴)₃ avec
R¹⁴ alkyle en C₁ à C₁₀, aryle en C₆ à C₁₅ ou cycloalkyle en C₃ à C₁₀,
ou tandis que les restes R⁴ et Z forment ensemble un groupement -R¹⁵-A-, dans lequel
R¹⁵ est 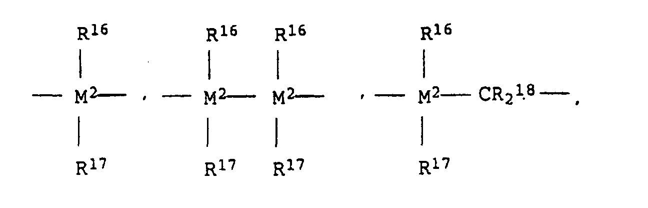 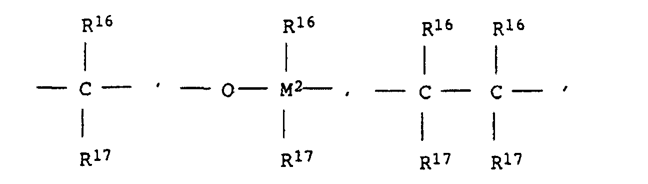 = BR¹⁶, = AlR¹⁶, -Ge-, -Sn-, -O-, -S-, = SO, = SO₂, = NR¹⁶, = CO, = PR¹⁶ ou = P(O)R¹⁶,
tandis que
R¹⁶, R¹⁷ et R¹⁸ sont identiques ou différents et représentent un atome d'hydrogène, un atome d'halogène, un groupe alkyle en C₁ à C₁₀, un groupe fluoroalkyle en C₁ à C₁₀, un groupe fluoroaryle en C₆ à C₁₀, un groupe aryle en C₆ à C₁₀, un groupe alcoxy en C₁ à C₁₀, un groupe alcényle en C₃ à C₁₀, un groupe arylalkyle en C₈ à C₄₀ ou un groupe alkylaryle en C₇ à C₄₀, ou tandis que deux restes voisins forment à chaque fois un cycle avec les atomes de carbone les reliant, et
M² est le silicium, le germanium ou l'étain,
A représente -O-, -S-, 〉NR¹⁹ ou 〉PR¹⁹ avec
R¹⁹ alkyle en C₁ à C₁₀, aryle en C₆ à C₁₅, cycloalkyle en C₃ à C₁₀, alkylaryle ou Si(R²⁰)₃,
R²⁰ hydrogène, alkyle en C₁ à C₁₀, aryle en C₆ à C₁₅, qui peut à son tour être substitué par des groupes alkyle en C₁ à C₄, ou cycloalkyle en C₃ à C₁₀,
ou tandis que les restes R⁴ et R¹² forment ensemble un groupement -R¹⁵-,
avec un composé activateur, qui peut réagir avec le composé de métallocène I de telle manière qu'un ligand X est déplacé de l'atome central M et que le complexe cationique formé est stabilisé sous forme de paire d'ions avec un anion non-coordinant,
b) addition d'une ou plusieurs α-oléfines avec un rapport molaire de composé de métallocène I: α-oléfine entre 1:1 et 1:100, et
c) mélange avec au moins 10 parties en volume d'un hydrocarbure aliphatique.

2. Solution catalytique selon la revendication 1, **caractérisée par le fait que** l'étape de préparation a) est effectuée en présence d'un hydrocarbure aromatique ou halogéné en tant que solvant.

3. Solution catalytique selon la revendication 1 ou 2, **caractérisée par le fait que** la production du composé de métallocène I est effectuée in situ par réaction d'un composé de métallocène I de formule générale II 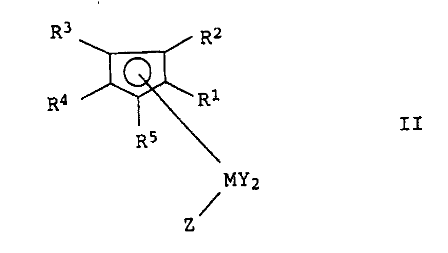 dans laquelle R¹, R², R³, R⁴, R⁵, M et Z ont la signification indiquée plus haut, et
Ydésigne le fluor, le chlore, le brome ou l'iode,
avec un alkyle correspondant d'un métal du 1^{er} , 2^{ème} ou 3^{ème} groupe principal de la classification périodique et on poursuit la réaction de la solution formée, sans purification, selon l'étape a).

4. Solution catalytique selon la revendication 3, **caractérisée par le fait qu'**on utilise comme alkyl-métal un alkyl-aluminium.

5. Solution catalytique selon les revendications 1 à 4, **caractérisée par le fait que** le rapport molaire de composé métallocène I:α-oléfine dans l'étape b) se situe entre 1:1 et 1:10.

6. Solution catalytique selon les revendications 1 à 5, **caractérisée par le fait que** l'α-oléfine ajoutée dans l'étape b) est le butène, l'hexène ou l'oxtène.

7. Procédé pour la polymérisation d'α-oléfines en présence d'une solution catalytique selon les revendications 1 à 6, **caractérisé par le fait qu'**on effectue la polymérisation en solution avec un solvant essentiellement aliphatique.

8. Procédé pour la polymérisation d'α-oléfines selon la revendication 7, **caractérisé par le fait qu'**on effectue la polymérisation à des températures entre 160 et 350°C et des pressions entre 500 et 3500 bar.

9. Procédé pour la polymérisation d'α-oléfines selon la revendication 7 ou 8, **caractérisé par le fait qu'**on utilise comme α-oléfine l'éthylène ou un mélange d'éthylène et de faibles quantités d'autres α-oléfines en C₁-C₈.

10. Utilisation d'une solution catalytique selon les revendications 1 à 6 pour la polymérisation d'α-oléfines.
